# EUROPEAN PATENT SPECIFICATION

(11) **EP 3 318 651 B1**
(45) Date of publication and mention of the grant of the patent: **13.11.2019**
(21) Application number: 16817633.7
(22) Date of filing: 02.06.2016
(51) Int. Cl.: C22C 38/00, C22C 38/58, C21D 8/00, B23K 35/30, C22C 38/02, C22C 38/42, C22C 38/44, C22C 38/48, C22C 38/50, C22C 38/54, C22C 38/46, C22C 38/04, C22C 38/52, B23K 103/04

(54) **AUSTENITIC HEAT-RESISTANT ALLOY AND WELDED JOINT**
AUSTENITISCHE HITZEBESTÄNDIGE LEGIERUNG UND SCHWEISSVERBINDUNG
ALLIAGE AUSTÉNITIQUE RÉSISTANT À LA CHALEUR ET JOINT SOUDÉ

(30) Priority: 01.07.2015 JP 2015132548
(43) Date of publication of application: 09.05.2018
(73) Proprietor: Nippon Steel Corporation, Tokyo 100-8071 (JP)
(72) Inventor: HIRATA, Hiroyuki, Tokyo 100-8071 (JP); OKADA, Hirokazu, Tokyo 100-8071 (JP); JOTOKU, Kana, Tokyo 100-8071 (JP); ISEDA, Atsuro, Tokyo 100-8071 (JP); ONO, Toshihide, Tokyo 100-8071 (JP); TANAKA, Katsuki, Tokyo 100-8071 (JP)
(74) Representative: J A Kemp LLP
(86) International application number: PCT/JP2016/066462
(87) International publication number: WO 2017/002524

(56) References cited:
- EP-A1- 0 690 141
- JP-A- H10 225 792
- JP-A- H11 285 889
- JP-A- 2001 262 283
- JP-A- 2013 067 843
- JP-A- 2013 076 156
- JP-A- 2013 133 533
- US-A1- 2014 154 128

## Description

### TECHNICAL FIELD

The present invention relates to an austenitic heat-resistant alloy and a welded joint using this alloy as the base material.

### BACKGROUND ART

In recent years, worldwide efforts have been made to increase temperatures and pressures during the operation of thermal power boilers or the like to reduce loads to the environment. Materials used in superheater tubes or reheater tubes are required to have improved high-temperature strength and corrosion resistance.

To meet these requirements, various austenitic heat-resistant alloys containing large amounts of nitrogen have been disclosed.

For example, JP Sho62(1987)-133048 A discloses an austenitic steel with good high-temperature strength containing 0.05 to 0.35 % N and 0.05 to 1.5 % Nb. JP 2000-256803 A discloses an austenitic stainless steel with good high-temperature strength and ductility containing 0.05 to 0.3 % N, where Nb (%)/Cu (%) is 0.05 to 0.2 % and the amount of undissolved Nb after a solutionizing process is 0.04×Cu(%) to 0.085×Cu (%).

JP 2000-328198 A discloses an austenitic stainless steel with good high-temperature strength and hot workability containing 0.05 to 0.3 % N and 2 to 6 % Cu, where the total content of one or more of Y, La, Ce and Nd is 0.01 to 0.2 % and the value represented by a relational expression of Mn, Mg, Ca, Y, La, Ce, Nd, Al, Cu and S is in a predetermined range.

JP 2003-268503 A discloses an austenitic stainless steel pipe with good high-temperature strength and steam-oxidadation resistance containing 0.005 to 0.2 % N, where the grain size is small, i.e. grain size number is 7 or more. WO 2013/073055 A1 discloses an austenitic stainless steel with good high-temperature strength and steam-oxidation resistance containing 0.005 to 0.3 % N, where the surface layer is covered with a processed layer with high energy density having an average thickness of 5 to 30 µm.

JP 2013-44013 A discloses an austenitic heat-resistant steel with good high-temperature strength and post-aging toughness containing 0.07 to 0.13 % N, where the austenite balance is adjusted by Mo, W and other alloy elements. JP 2014-88593 A discloses an austenitic stainless steel with good high-temperature strength and oxidation resistance containing 0.10 to 0.35 % N and 0.25 to 0.8 % Ta.

WO 2009/044796 A1 discloses a high-strength austenitic stainless steel containing 0.03 to 0.35 % N and one or more of Nb, V and Ti.

US 2014/0154128 discloses a heat-resistant austenitic stainless steel comprising C: 0.05 to 0.2%, Si: 0.1 to 1%, Mn: 0.1 to 2.5%, Cu: 1 to 4%, Ni: 7 to 12%, Cr: 16 to 20%, Nb: 0.1 to 0.6%, Zr: 0.05 to 0.4%, Ce: 0.005 to 0.1%, Ti: 0.1 to 0.6%, B: 0.0005 to 0.005%, N: 0.001 to 0.15%, S: 0.005% or less (not including 0%), and P: 0.05% or less (not including 0%), with the balance of iron and unavoidable impurities.

JP H11-285889 discloses a TIG welding material having a superior weldability for austenitic heat resisting steel which contains, in weight %, 0.01-0.05 C, 0.1-1.0 Si, 0.5-1.5 Mn, <0.01 P, <0.005 S, 14.0-22.0 Cr, 10.0-20.0 Ni, 0.5-2.5 Mo, 0.5-4.0 W, 0.1-0.5 Nb, 0.5-4.0 Cu, <0.04 Al, 0.3-0.8 V, 0.10-0.30 N, and the balance Fe and inevitable impurities; and that Ni equivalent/Cr equivalent is 0.50-0.90, in which Cr equivalent is obtained by a formula Cr+Mo+0.5W+1.5Si+0.5Nb+5V+3A1, while Ni equivalent by a formula Ni+30C +30(N-0.045)+0.44Cu+0.87.

JP H10-225792 discloses a welding material which contains 0.01 to 0.05% C, 0.1 to 1.0% Si, 0.5 to 1.5% Mn, 0.01% P or below, 0.005% S or below, 14.0 to 23.0% Cr, 10.0 to 16.0% Ni, 0.5 to 2.5% Mo, 0.5 to 4.0% (w), 0.1 to 0.5% Nb, 0.04% Al or below, 0.3 to 0.8% (v) and 0.10 to 0.30% N by weight ratio and consists of iron as the remainder and inevitable impurities.

JP 2013-067843 discloses an austenitic heat-resistant steel containing, by mass%, 0.02-0.08% C, 0.3-0.8% Si, 0.6-2.0% Mn, ≤0.040% P, ≤0.005% S, >15-26% Ni, 18-23% Cr, 1.8-4.2% W, ≤0.5% Mo, 0.2-0.5% Nb, 0.001-0.040% Al, 0.07-0.13% N, <0.001% B and the balance Fe with inevitable impurities, and which satisfies the following three formulas: 0.05%≤Nb-0.031(C+N)(-0.744Nb-0.772)≤0.15%; 2.8%≤W+2Mo≤4.2%; and 9.5% ≤Ni+27C+23N+0.2Mn+0.3Cu-1.2(Cr+Mo+0.5W)-0.5Si-0.3Nb+10%.

### DISCLOSURE OF THE INVENTION

These austenitic heat-resistant alloys are usually welded for assembly and then used at high temperatures. However, when welded structures using austenitic heat-resistant alloys having high N contents are used at high temperatures for a prolonged period of time, cracks called strain-induced precipitation hardening (SIPH) cracks may occur in weld-heat-affected zones.

WO 2009/044796 A1 discussed above states that limiting the amounts of the elements that cause embrittlement of the grain boundaries and the elements that strengthen the grain interiors to certain ranges prevents cracking that would occur during use for a prolonged period of time. Indeed, these materials prevent cracking under certain conditions. However, in recent years, the use of austenitic heat-resistant alloys with large amounts of W, Mo etc. added thereto to further improve properties such as high-temperature strength has become widespread. For some weld conditions, structure shapes and sizes, for example, these austenitic heat-resistant alloys may not prevent cracking in a stable manner. More specifically, they may not prevent cracking in a stable manner for high welding heat inputs, heavy plate thicknesses or high use temperatures such as above 650 °C.

An object of the present invention is to provide an austenitic heat-resistant alloy that provides good crack resistance and high-temperature strength in a stable manner.

An austenitic heat-resistant alloy according to an embodiment of the present invention has a chemical composition of, in mass %: 0.04 to 0.15 % C; 0.05 to 1 % Si; 0.3 to 2.5 % Mn; up to 0.04 % P; up to 0.0015 % S; 2 to 4 % Cu: 11 to 16 % Ni; 16 to 20 % Cr; 2.2 to 5 % W; 0.1 to 0.8 % Nb; 0.05 to 0.35 % Ti; 0.001 to 0.015 % N; 0.0005 to 0.01 % B; up to 0.03 % Al; up to 0.02 % O; 0 to 0.02 % Sn; 0 to 0.5 % V; 0 to 2 % Co; 0 to 5 % Mo; 0 to 0.02 % Ca; 0 to 0.02 % Mg; 0 to 0.2 % REM; and the balance being Fe and impurities, the alloy having a microstructure with a grain size represented by a grain size number in accordance with ASTM E112 of 2.0 or more and less than 7.0.

The present invention provides an austenitic heat-resistant alloy that provides good crack resistance and high-temperature strength in a stable manner.

### BRIEF DESCRIPTION OF THE DRAWINGS

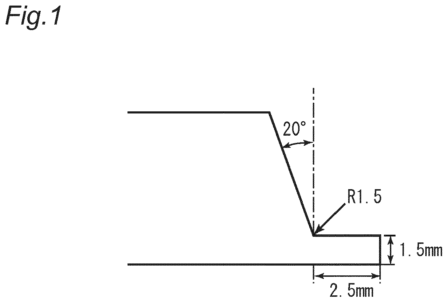

[FIG. 1] FIG. 1 is a cross-sectional view of a bevel produced for the Examples, showing the shape of the groove thereof.

### EMBODIMENTS FOR CARRYING OUT THE INVENTION

The present inventors conducted a detailed investigation to solve the above-discussed problems, and revealed the following findings.

The inventors thoroughly investigated SIPH cracks occurring, during use, in welded joints using austenitic heat-resistant alloys with high N contents. They found that (1) cracks developed along grain boundaries in weld-heat-affected zones with coarse grains near the fusion lines, and (2) clear concentrating of S was detected on the fractured surfaces of cracks. They further found that (3) large amounts of nitrides and carbonitrides had precipitated within grains near the cracks. In addition, they found that (4) the larger the initial grain size of the used austenitic heat-resistant alloy, the larger the grain size in weld-heat-affected zones became and the more likely cracking occurred.

From these finding, they assumed that SIPH cracks occurred because large amounts of nitrides and carbonitrides precipitate within grains during use at high temperatures and thus the grain interiors become less likely to be deformed, which leads to concentration of creep deformations on grain boundaries and finally to openings. S segregates on grain boundaries during welding or during use and thereby decreases the bonding force of the grain boundaries. Further, the larger the grain size, the smaller the area of grain boundaries per unit volume. Grain boundaries work as sites for producing nuclei for nitride and carbonitride particles. Thus, the smaller the grain boundaries, the larger the amounts of nitrides and carbonitrides that precipitate within grains. In addition, creep deformations that are caused by external forces applied during use, for example welding residual stress, are the more likely to be concentrated on certain grain boundaries. Thus, the inventors concluded that the larger the initial grain size of the base material, the more likely cracking occurs. Particularly, they concluded that, at high temperatures above 650 °C, precipitates precipitate in short periods of time and, in addition, grain-boundary segregation occurs at early stages, making the problems more apparent.

To prevent such cracking, it is effective to reduce elements that increase the deformation resistance within the grains by using precipitation strengthening or solute strengthening. However, these elements are indispensable to provide sufficient creep strength at high temperatures. Thus, the prevention of cracks and the provision of sufficient creep strength at high temperatures are tradeoffs and are difficult to achieve at the same time.

After extended research, the inventors revealed that, in order to prevent SIPH cracking in an austenitic heat-resistant alloy containing 0.04 to 0.15 % C, 0.05 to 1 % Si, 0.3 to 2.5 % Mn, up to 0.04 % P, 2 to 4 % Cu, 11 to 16 % Ni, 16 to 20 % Cr, 0.1 to 0.8 % Nb, 0.05 to 0.35 % Ti, 0.0005 to 0.01 % B, up to 0.03 % Al, and up to 0.02 % O, it is effective to exactly control the N content to be up to 0.015 % and the S content to be up to 0.0015 %, and to have an initial grain size of the base material represented by a grain size number as defined by the American Society for Testing and Material (ASTM) of 2.0 or more.

However, if the N content is excessively reduced or the grain size is finer than necessary, the creep strength of the base material does not reach a specified value. Thus, the inventors found that the N content needs to be 0.001 % or higher and the grain size as represented by grain size number needs to be less than 7.0. In addition, they revealed that W, which contributes to creep strength by means of solute strengthening at an early stage of heating and slowly precipitates in the form of a Laves phase during use for a prolonged period of time, needs to be contained in 2 to 5 % in order to reach a specified creep strength without impairing SIPH resistance.

While the inventors determined that these steps indeed prevent SIPH cracking, they found out during the research that another problem may arise.

As discussed above, austenitic heat-resistant alloys are generally welded for assembly. When they are welded, a filler material is usually used. However, for small parts with thin wall thicknesses, or even for components with heavy wall thickness for root running or tack welding, gas shield-arc welding may be performed without using a filler material. If the penetration depth is insufficient at this time, unwelded abutting surfaces remain as weld defects, and the strength required of a welded joint cannot be obtained. While S reduces SIPH crack resistance, S has the effect of increasing the penetration depth. Thus, the inventors found that the problem of insufficient penetration depth may occur if the S content is exactly controlled to be 0.0015 % or less to address the issue of SIPH crack resistance.

To prevent insufficient penetration depth, welding heat input may be simply increased. However, increasing welding heat input brings about grain coarsening in weld-heat-affected zones, and the inventors failed to prevent SIPH cracking even when the initial grain size of the base material had a grain size number of 2.0 or more.

After further research, the inventors found that, in order to prevent insufficient penetration depth in a stable manner, it is effective to have an Sn content in the range of 0.001 to 0.02 %. They concluded that this is because Sn can easily evaporate from the surface of the molten pool during welding and ionize in the arc to contribute to the formation of an electrifying path, thereby increasing the current density of the arc.

The present invention was made based on the above-discussed findings. An austenitic heat-resistant alloy according to an embodiment of the present invention will now be described in detail.

### [Chemical Composition]

The austenitic heat-resistant alloy according to the present embodiment has the chemical composition described below. In the following description, "%" in the content of an element means mass percent.

### C: 0.04 to 0.15 %

Carbon (C) stabilizes the austenite microstructure and forms fine carbide particles to improve creep strength during use at high temperatures. 0.04 % or more C needs to be contained in order that these effects are sufficiently present. However, if an excess amount of C is contained, large amounts of carbides precipitate, which reduces SIPH crack resistance. In view of this, the upper limit should be 0.15 %. The lower limit of C content is preferably 0.05 %, and more preferably 0.06 %. The upper limit of C content is preferably 0.13 %, and more preferably 0.12 %.

### Si: 0.05 to 1 %

Silicon (Si) has a deoxidizing effect, and is effective in improving the corrosion resistance and oxidation resistance at high temperatures. 0.05 % or more Si needs to be contained in order that these effects are sufficiently present. However, if an excess amount of Si is contained, the stability of the microstructure decreases, which decreases toughness and creep strength.

In view of this, the upper limit should be 1 %. The lower limit of Si content is preferably 0.08 %, and more preferably 0.1 %. The upper limit of Si content is preferably 0.5 %, and more preferably 0.35 %.

### Mn: 0.3 to 2.5 %

Similar to Si, manganese (Mn) has a deoxidizing effect. Mn also contributes to the stabilization of austenite microstructure. 0.3 % or more Mn needs to be contained in order that these effects are sufficiently present. However, if an excess amount of Mn is contained, this causes embrittlement of the alloy, and creep ductility decreases. In view of this, the upper limit should be 2.5 %. The lower limit of Mn content is preferably 0.4 %, and more preferably 0.5 %. The upper limit of Mn content is preferably 2 %, and more preferably 1.5 %.

### P: up to 0.04 %

Phosphorus (P) is contained in the alloy in the form of an impurity, and, during welding, segregates on grain boundaries in weld-heat-affected zones, thereby increasing liquation cracking susceptibility. P also decreases creep ductility after use for a prolonged period of time. In view of this, an upper limit should be set for P content, which should be 0.04 % or lower. The upper limit of P content is preferably 0.035 %, and more preferably 0.03 %. It is preferable to minimize P content; however, reducing it excessively causes increased steel-manufacturing cost. In view of this, the lower limit of P content is preferably 0.0005 %, and more preferably 0.0008 %.

### S: less than 0.0015 %

Similar to P, sulfur (S) is contained in the alloy in the form of an impurity, and, during welding, segregates on grain boundaries in weld-heat-affected zones, thereby increasing liquation cracking susceptibility. S also segregates on grain boundaries during use for a prolonged period of time and causes embrittlement, which significantly reduces SIPH crack resistance. To prevent these effects within the limits of the chemical composition of the present embodiment, the S content needs to be up to 0.0015 %. The upper limit of S content is preferably 0.0012 %, and more preferably 0.001 %. It is preferable to minimize S content; however, reducing it excessively causes increased steel-manufacturing cost. In view of this, the lower limit of S content is preferably 0.0001 %, and more preferably 0.0002 %.

### Cu: 2 to 4 %

Copper (Cu) stabilizes the austenite microstructure, and precipitates in the form of fine particles during use to contribute to the improvement of creep strength. 2 % or more Cu needs to be contained in order that these effects are sufficient present. On the other hand, if an excessive amount of Cu is contained, this causes a decrease in hot workability. In view of this, the upper limit should be 4 %. The lower limit of Cu content is preferably 2.3 %, and more preferably 2.5 %. The upper limit of Cu content is preferably 3.8 %, and more preferably 3.5 %.

### Ni: 11 to 16 %

Nickel (Ni) is an element indispensable for providing sufficient stability of the austenite phase during use for a prolonged period of time. 11 % or more Ni needs to be contained in order that this effect is sufficiently present within the limits of Cr and W contents of the present embodiment. However, Ni is an expensive element, and large amounts of Ni contained mean increased costs. In view of this, the upper limit should be 16 %. The lower limit of Ni content is preferably 12 %, and more preferably 13 %. The upper limit of Ni content is preferably 15.5 %, and more preferably 15 %.

### Cr: 16 to 20 %

Chromium (Cr) is an element indispensable for providing sufficient oxidation resistance and corrosion resistance at high temperatures. Cr also forms fine carbide particles to contribute to the provision of sufficient creep strength, too. 16 % or more Cr needs to be contained in order that these effects are sufficiently present within the limits of Ni content of the present embodiment. However, if an excessive amount of Cr is contained, the microstructure stability of the austenite phase at high temperatures deteriorates, which decreases creep strength. In view of this, the upper limit should be 20 %. The lower limit of Cr content is preferably 16.5 %, and more preferably 17 %. The upper limit of Cr content is preferably 19.5 %, and more preferably 19 %.

### W: 2.2 to 5 %

Tungsten (W) dissolves in the matrix and, in addition, delays the production of a sigma phase, which is a harmful intermetallic compound phase, and precipitates in the form of fine Laves phase particles to significantly contribute to the improvement of creep strength and tensile strength at high temperatures. 2 % or more W needs to be contained in order that these effects are sufficiently present. However, if an excess amount of W is contained, the deformation resistance with grains becomes high and SIPH crack resistance reduces, and creep strength may decrease. Further, W is an expensive element, and large amounts of W contained mean increased costs. In view of this, the upper limit should be 5 % and the lower limit 2.2%. The lower limit of W content is preferably 2.5 %. The upper limit of W content is preferably 4.8 %, and more preferably 4.5 %.

### Nb: 0.1 to 0.8 %

Niobium (Nb) precipitates in the form of fine carbonitride particles within grains to contribute to the improvement of creep strength and tensile strength at high temperatures. 0.1 % or more Nb needs to be contained in order that these effects are sufficiently present. However, if an excess amount of Nb is contained, large amounts of carbonitrides precipitate, which reduces SIPH crack resistance and causes a decrease in creep ductility and toughness. In view of this, the upper limit should be 0.8 %. The lower limit of Nb content is preferably 0.12 %, and more preferably 0.15 %. The upper limit of Nb content is preferably 0.7 %, and more preferably 0.65 %.

### Ti: 0.05 to 0.35 %

Similar to Nb, Titanium (Ti) forms fine carbonitride particles to contribute to the improvement of creep strength and tensile strength at high temperatures. 0.05 % or more Ti needs to be contained in order that these effects are sufficient present. On the other hand, if an excess amount of Ti is contained, large amounts of precipitates are produced, which reduces SIPH crack resistance, and creep ductility and toughness decrease. In view of this, the upper limit should be 0.35 %. The lower limit of Ti content is preferably 0.08 %, and more preferably 0.12 %. The upper limit of Ti content is preferably 0.32 %, and more preferably 0.3 %.

### N: 0.001 to 0.015 %

Nitrogen (N) stabilizes the austenite microstructure, and dissolves in the matrix or precipitates in the form of nitrides to contribute to the improvement of high-temperature strength. 0.001 % or more N needs to be contained in order that these effects are sufficiently present. However, if an excessive amount of N is contained, it dissolves during use for a short period of time, or large amounts of fine nitride particles precipitate within grains during use for a prolonged period of time, thereby increasing the deformation resistance within grains, which reduces SIPH crack resistance. Further, creep ductility and toughness decrease. In view of this, the upper limit should be 0.015 %. The lower limit of N content is preferably 0.002 %, and more preferably 0.004 %. To define an upper limit, the N content is preferably lower than 0.015 %, and more preferably not higher than 0.012 %, and yet more preferably not higher than 0.01 %.

### B: 0.0005 to 0.01 %

Boron (B) provides fine dispersed grain-boundary carbide particles to improve creep strength, and segregates on grain boundaries to strengthen grain boundaries. 0.0005 % or more B needs to be contained in order that these effects are sufficiently present. However, if an excess amount of B is contained, the weld thermal cycle during welding causes a large amount of B to segregate in weld heat affected zones near melt boundaries to decrease the melting point of grain boundaries, thereby increasing liquation cracking susceptibility. In view of this, the upper limit should be 0.01 %. The lower limit of B content is preferably 0.0008 %, and more preferably 0.001 %. The upper limit of B content is preferably 0.008 %, and more preferably 0.006 %.

### Al: up to 0.03 %

Aluminum (Al) has a deoxidizing effect. However, if an excess amount of Al is contained, the cleanliness of the alloy deteriorates, which decreases hot workability. In view of this, the upper limit should be 0.03 %. The upper limit of Al content is preferably 0.025 %, and more preferably 0.02 %. No lower limit needs to be set; still, it should be noted that decreasing Al excessively causes an increase in steel-manufacturing cost. In view of this, the lower limit of Al content is preferably 0.0005 %, and more preferably 0.001 %. Al as used herein means acid-soluble Al (sol. Al).

### O: up to 0.02 %

Oxygen (O) is contained in the alloy in the form of an impurity, and has the effect of increasing the penetration depth during welding. However, if an excess amount of O is contained, hot workability decreases and toughness and ductility deteriorate. In view of this, the upper limit should be 0.02 %. The upper limit of O content is preferably 0.018 %, and more preferably 0.015 %. No lower limit needs to be set; still, it should be noted that decreasing O excessively causes an increase in steel-manufacturing cost. In view of this, the lower limit of O content is preferably 0.0005 %, and more preferably 0.0008 %.

The balance of the chemical composition of the austenitic heat-resistant alloy in the present embodiment is Fe and impurities. Impurity as used herein means an element originating from ore or scrap used as raw material for the heat-resistant alloy being manufactured on an industrial basis or an element that has entered from the environment or the like during the manufacturing process.

In the chemical composition of the austenitic heat-resistant alloy in the present embodiment, some of the Fe may be replaced by Sn. Sn is an optional element. That is, the chemical composition of the austenitic heat-resistant alloy in the present embodiment need not contain Sn.

### Sn: 0 to 0.02 %

Tin (Sn) has the effect of increasing the penetration depth during welding by evaporating from the molten pool to increase the current density of the arc. This effect is present if a small amount of Sn is contained; this effects will be significant if 0.001 % or more Sn is contained. On the other hand, if an excess amount of Sn is contained, the liquation cracking susceptibility in weld-heat-affected zones during welding and the SIPH crack susceptibility during use become high. In view of this, the upper limit should be 0.02 %. The lower limit of Sn content is more preferably 0.0015 %, and yet more preferably 0.002 %. The upper limit of Sn content is preferably 0.018 %, and more preferably 0.015 %.

Further, in the chemical composition of the austenitic heat-resistant alloy in the present embodiment, some of the Fe may be replaced by one or more elements selected from one of the first to third groups provided below. All of the elements listed below are optional elements. That is, none of the elements listed below may be contained in the austenitic heat-resistant alloy of the present embodiment. Or, only one or some of them may be contained.

More specifically, for example, only one group may be selected from among the first to third groups and one or more elements may be selected from this group. In this case, it is not necessary to select all the elements belonging to the selected group. Further, a plurality of groups may be selected from among the first to third groups and one or more elements may be selected from each of these groups. Again, it is not necessary to select all the elements belonging to the selected groups.

### First Group-V: 0 to 0.5 %

The element belonging to the first group is V. V improves the creep strength of the alloy through precipitation strengthening.

### V: 0 to 0.5 %

Similar to Nb and Ti, vanadium (V) combines with carbon or nitrogen to form fine carbide or carbonitride particles, thereby contributing to the improvement of creep strength. These effects are present if a small amount of V is contained. On the other hand, if an excess amount of V is contained, large amounts of precipitates are produced, which reduces SIPH resistance and creep ductility. In view of this, the upper limit should be 0.5 %. The lower limit of V content is preferably 0.01 %, and more preferably 0.03 %. The upper limit of V content is preferably 0.45 %, and more preferably 0.4 %.

### Second Group-Co: 0 to 2 %, Mo: 0 to 5 %

The elements belonging to the second group are Co and Mo. These elements improve the creep strength of the alloy.

### Co: 0 to 2 %

Similar to Ni and Cu, cobalt (Co) is an austenite-forming element, and increases the stability of the austenite microstructure to contribute to the improvement of creep strength. These effects are present if a small amount of Co is contained. However, Co is a very expensive element, and large amounts of Co contained mean increased costs. In view of this, the upper limit should be 2 %. The lower limit of Co content is preferably 0.01 %, and more preferably 0.03 %. The upper limit of Co content is preferably 1.8 %, and more preferably 1.5 %.

### Mo: 0 to 5 %

Molybdenum (Mo) dissolves in the matrix and contributes to the improvement of creep strength and tensile strength at high temperatures. These effects are present if a small amount of Mo is contained. On the other hand, if an excessive amount of Mo is contained, the deformation resistance within grains becomes high and SIPH crack resistance reduces while the production a sigma phase which is a harmful intermetallic compound phase is facilitated, and creep strength may decrease. Further, Mo is an expensive element, and large amounts of Mo contained mean increased costs. In view of this, the upper limit should be 5 %. The lower limit of Mo content is preferably 0.01 %, and more preferably 0.03 %. The upper limit of Mo content is preferably 4.8 %, and more preferably 4.5 %.

### Third Group-Ca: 0 to 0.02 %, Mg: 0 to 0.02 %, REM: 0 to 0.2 %

The elements belonging to the third group are Ca, Mg and REM. These elements improve hot workability of the alloy.

### Ca: 0 to 0.02 %

Calcium (Ca) improves hot workability during manufacture. This effect is present if a small amount of Ca is contained. On the other hand, if an excessive amount of Ca is contained, it combines with oxygen to significantly decrease the cleanliness of the alloy, which decreases hot workability. In view of this, the upper limit should be 0.02 %. The lower limit of Ca content is preferably 0.0005 %, and more preferably 0.001 %. The upper limit of Ca content is preferably 0.01 %, and more preferably 0.005 %.

### Mg: 0 to 0.02 %

Similar to Ca, magnesium (Mg) improves hot workability during manufacture. This effect is present if a small amount of Mg is contained.

On the other hand, if an excess amount of Mg is contained, it combines with oxygen to significantly decrease the cleanliness of the alloy, which decreases hot workability. In view of this, the upper limit is 0.02 %. The lower limit of Mg content is preferably 0.0005 %, and more preferably 0.001 %. The upper limit of Mg content is preferably 0.01 %, and more preferably 0.005 %.

### REM: 0 to 0.2 %

Similar to Ca and Mg, rare-earth metals (REMs) improve hot workability during manufacture. This effect is present if a small amount of REM is contained. On the other hand, if an excessive amount of REM is contained, it combines with oxygen to significantly decrease the cleanliness of the alloy, which decreases hot workability. In view of this, the upper limit should be 0.2 %. The lower limit of REM content is preferably 0.0005 %, and more preferably 0.001 %. The upper limit of REM content is preferably 0.15 %, and more preferably 0.1 %.

"REM" is a collective term for a total of 17 elements, i.e. Sc, Y and the lanthanoids, and "REM content" means the total content of one or more REM elements. REMs are usually contained in mischmetal. Thus, for example, mischmetal may be added to the alloy such that the REM content is in the above-indicated range.

### [Microstructure]

### Grain Size Number: 2.0 or more and less than 7.0

The austenitic heat-resistant alloy according to the present embodiment has a microstructure having a grain size represented by a grain size number in accordance with ASTM E112 of 2.0 or more and less than 7.0.

In order to give sufficient SIPH crack resistance to the weld-heat-affected zones of a welded structure using the austenitic heat-resistant alloy of the present embodiment, the grains of the microstructure before welding need to be fine grains, i.e. their size as represented by grain size number in accordance with ASTM E112 needs to be 2.0 or more, in order to prevent the grains in the weld-heat-affected zones from becoming excessively coarse even after being affected by the heat cycle from the welding. On the other hand, if the grains are so fine as to have a grain size number of 7.0 or more, the required creep strength is not obtained. In view of this, the grain size number should be 2.0 or more and less than 7.0.

The microstructure having the above-specified grain size can be provided by performing a heat treatment on the alloy with the above-specified chemical composition under appropriate conditions. This microstructure may be achieved by, for example, shaping the alloy of the above-specified chemical composition into a predetermined shape by hot working or cold working before performing a solution heat treatment in which it is held at temperatures of 1000 to 1250 °C for 3 to 60 minutes before water cooling. The higher the holding temperature of the solution heat treatment and the longer the holding time, the larger the grain size becomes (i.e. the smaller the grain size number becomes). More preferably, the solution heat treatment involves holding the alloy at temperatures of 1150 to 1250 °C for 3 to 45 minutes before water cooling, and yet more preferably holding the alloy at temperatures of 1170 to 1240 °C for 3 to 30 minutes before water cooling.

The austenitic heat-resistant alloy according to an embodiment of the present invention has been described. The present embodiment provides an austenitic heat-resistant alloy providing good crack resistance and high-temperature strength in a stable manner.

### EXAMPLES

The present invention will be described in more detail below using examples. The present invention is not limited to these examples.

The materials labeled A to L having the chemical compositions shown in Table 1 were melted in a laboratory and ingots were cast, which were subjected to hot forging and hot rolling in the temperature range of 1000 to 1150 °C to provide plates with a thickness of 20 mm. These plates were further subjected to cold rolling to the thickness of 16 mm. The plates were subjected to a solution heat treatment in which they were held at 1200 °C for a predetermined period of time before water cooling. After the solution heat treatment, they were machined to plates with a thickness of 14 mm, a width of 50 mm and a length of 100 mm. From other plates subjected to the solution heat treatment, samples to be used for microstructure observation were taken and the grain size of the microstructure of each sample was measured in accordance with ASTM E 112. From material A, materials with different grain sizes were produced by changing the holding time of the solution heat treatment in the range of 3 to 30 minutes.

### [Table 1]

**TABLE 1**

| Mark | Chemical composition (in mass %, balance being Fe and impurities) | | | | | | | | | | | | | | | | |
|---|---|---|---|---|---|---|---|---|---|---|---|---|---|---|---|---|---|
| | C | Si | Mn | P | S | Cu | Ni | Cr | W | Nb | Ti | N | B | Al | O | Sn | Other |
| A | 0.08 | 0.25 | 0.82 | 0.020 | 0.0014 | 3.0 | 14.5 | 18.1 | 3.4 | 0.45 | 0.19 | 0,003 | 0,0021 | 0.003 | 0.009 | - | |
| B | 0.11 | 0.22 | 0.79 | 0.019 | 0.0003 | 3.1 | 14.1 | 17.8 | 3.2 | 0.42 | 0.20 | 0.004 | 0.0034 | 0.011 | 0.003 | - | Ca: 0.002 |
| C | 0.07 | 0.22 | 0,75 | 0.018 | 0.0004 | 2.8 | 13.9 | 17.8 | 3.6 | 0.46 | 0.23 | 0.014 | 0,0019 | 0.010 | 0.005 | - | |
| D | 0.09 | 0.19 | 0,78 | 0.010 | 0.0003 | 3.3 | 14.3 | 18.2 | 3.5 | 0.45 | 0.17 | 0,005 | 0,0020 | 0.002 | 0.011 | 0.002 | |
| E | 0.08 | 0.24 | 0.81 | 0.008 | 0.0013 | 3.0 | 13.5 | 18.4 | 3.7 | 0.38 | 0.16 | 0.013 | 0.0025 | 0.002 | 0.010 | 0.004 | |
| F | 0.10 | 0.17 | 0.55 | 0.007 | 0.0006 | 2.4 | 15.2 | 17.9 | 3.0 | 0.40 | 0.21 | 0.006 | 0,0024 | 0.002 | 0.008 | 0.015 | Mo: 0.12, REM: 0.005 |
| G | 0.06 | 0,19 | 0.62 | 0.005 | 0.0009 | 2.8 | 14.7 | 18.2 | 2.4 | 0.32 | 0.25 | 0.010 | 0.0032 | 0.008 | 0.012 | 0.018 | Co: 0.08, V: 0.08, Mg: 0.002 |
| H | 0.09 | 0,20 | 0.77 | 0.023 | 0.0023 * | 3.0 | 13.5 | 17.8 | 3.2 | 0.55 | 0.18 | 0.005 | 0.0020 | 0.004 | 0.007 | - | |
| I | 0.09 | 0.19 | 0.81 | 0.025 | 0.0008 | 3.1 | 13.6 | 18.1 | 3.3 | 0.54 | 0.20 | 0.004 | 0.0023 | 0.002 | 0.014 | 0.034 * | |
| J | 0.08 | 0.23 | 0.69 | 0.019 | 0.0012 | 2.5 | 14.2 | 18.3 | 3.1 | 0.49 | 0.16 | 0.122 * | 0.0019 | 0.003 | 0.011 | 0.016 | |
| K | 0.14 | 0.21 | 0.65 | 0.026 | 0.0014 | 2.7 | 14.0 | 18.5 | 3.6 | 0.62 | 0.32 | 0.018 * | 0.0015 | 0.003 | 0.010 | 0.003 | |
| L | 0.08 | 0.24 | 0.80 | 0.022 | 0.0013 | 2.9 | 12.5 | 18.8 | 1.8 * | 0.30 | 0.15 | 0.004 | 0.0011 | 0.006 | 0.008 | - | |

| | | | | | | | | | | | | | | | | | |
|---|---|---|---|---|---|---|---|---|---|---|---|---|---|---|---|---|---|
| * indicates that the value is outisde the range specified by the present invention. | | | | | | | | | | | | | | | | | |

### [Weldability in Fabrication]

The groove shown in FIG. 1 was provided along the longitudinal direction of each plate produced as described above. With grooved plates abutting each other, two joints for each mark were subjected to butt welding using gas-tungsten arc welding to produce welded joints. The welding did not use filler material, and the amount of heat input was 5 kJ/cm.

Those of the obtained welded joints that had back beads across the entire length of the weld line for both joint parts were determined to have good weldability in fabrication and thus to have passed the test. Those of the joints having passed the test that had back beads with a width of 2 mm or larger across the entire length were determined to be "good", and those that had a bead portion with a width smaller than 2 mm were determined to be "acceptable". Those that had a portion for either joint part in which no back bead was present were determined to be "unacceptable".

### [Weld Crack Resistance]

Each of the above-described welded joints, with only a first welded layer (i.e. root running), was placed on a commercial steel plate equivalent to the SM400B plate specified by JIS G 3106 (2008) (with a thickness of 30 mm, a width of 200 mm and a length of 200 mm), and restraint welding was performed on the four sides using a covered arc welding rod ENi 6625 specified by JIS Z 3224 (2010). Thereafter, a tig wire equivalent to the SNi 6625 wire specified by JIS Z 3334 (2011) was used to perform a multi-layer welding in the groove by TIG welding with a heat input of 10 to 15 kJ/cm, thereby producing welded joints, two for each mark.

Aging was performed on one of the welded-joint parts for each mark at 700 °C for 500 hours. Samples were taken from five points on each of the as-welded joints and welded joints after aging, with the observation surface represented by a transverse cross section of the joint (i.e. cross section perpendicular to the weld beads). Mirror polishing and etching were performed on these samples before inspection by optical microscopy to determine whether cracks were present in the weld-heat-affected zones. Welded joints where no cracks were found in any of the five samples were determined to be "good" and those where cracks were found in one sample were determined to be "acceptable", thus to have passed the test. Those welded joints where cracks were found in two or more samples were determined to be "unacceptable".

### [Creep-Rupture Strength]

From those as-welded joints that have passed the weld crack resistance test, round-bar creep-rupture test specimens were taken such that the center of the parallel portion was made of welded metal. Creep-rupture testing was conducted at 700 °C and under 186 MPa, conditions that result in a target fracture time for the base material of about 1000 hours. The base material was fractured, and those joints where the fracture time was 90 % or more of the fracture time of the base material (i.e. 900 hours or longer) were determined to have "passed" the test.

### [Performance Evaluation Results]

The performance evaluation results are shown in Table 2. Table 2 also shows the grain size number of the austenitic heat-resistant alloy for each mark.

### [Table 2]

**TABLE2**

| Mark | Grain size number | Weldablity in Fabrication | Weld crack | | Creep-rupture test result |
|---|---|---|---|---|---|
| | | | as-welded | aged | |
| A-1 | 2.8 | good | good | good | passed |
| A-2 | 4.2 | good | good | good | passed |
| A-3 | 5.7 | good | good | good | passed |
| A-4 | 6.6 | good | good | good | passed |
| A-5 | 1.8 * | good | good | unacceptable | not tested |
| A-6 | 8.4 * | good | good | good | not passed |
| B | 4.5 | acceptable | good | good | passed |
| C | 5.2 | acceptable | good | good | passed |
| D | 4.8 | good | good | good | passed |
| E | 4.6 | good | good | good | passed |
| F | 4.1 | good | good | good | passed |
| G | 4.4 | good | acceptable | acceptable | passed |
| H | 3.9 | good | acceptable | unacceptable | not tested |
| I | 3.7 | good | unacceptable | unacceptable | not tested |
| J | 3.9 | good | good | unacceptable | not tested |
| K | 4.2 | good | good | unacceptable | not tested |
| L | 4.4 | good | good | good | not passed |

| | | | | | |
|---|---|---|---|---|---|
| * indicates that the value is outisde the range specified by the present invention. | | | | | |

Each of the welded joints using the austenitic heat-resistant alloys with Marks A-1 to A-4 as the base material had an appropriate chemical composition, where the initial grain size of the base material had a grain size of 2.0 or more and less than 7.0. Each of these welded joints had a back bead with a width of 2 mm or more across the entire length after root running, and had good weldability in fabrication. Further, though the thickness of the base material was 14 mm, which is relatively large, no cracks were produced in weld-heat-affected zones even after aging, meaning good crack resistance. Further, the creep-rupture strength at high temperatures was sufficient.

In each of the welded joints using the austenitic heat-resistant alloys with Marks B and C as the base material, the chemical composition was appropriate and the initial grain size of the base material, as represented by grain size number, was 2.0 or more and less than 7.0. Each of these welded joints had some back-bead portions with a small width, but they were acceptable. These welded joints had good crack resistance and high-temperature creep strength.

In each of the welded joints using the austenitic heat-resistant alloys with Marks D to G as the base material, the chemical composition was appropriate and the initial grain size of the base material, as represented by grain size number, was 2.0 or more and less than 7.0. Each of these welded joints had a back bead with a width of 2 mm or larger across the entire length after root running, and had good weldability in fabrication. These welded joints provided good weldability in fabrication in a stable manner presumably because the chemical composition of the base material included Sn. Further, these welded joints had good crack resistance and high-temperature creep strength.

In the welded joint using the austenite heat-resistant alloy with Mark A-5 as the base material, cracks that are believed to be SIPH cracks were produced after aging. This is presumably because the grain size of the austenitic heat-resistant alloy with Mark A-5 was too large.

The welded joint using the austenitic heat-resistant alloy with Mark A-6 as the base material had good crack resistance, but the creep-rupture time was below the target. This is presumably because the grain size of the austenitic heat-resistant alloy with Mark A-6 was too small.

The welded joint using the austenitic heat-resistant alloy with Mark H as the base material had good weldability in fabrication, but cracks that are believed to be SIPH cracks were produced after aging. This is presumably because the S content in the austenitic heat-resistant alloy with Mark H was too high.

In the welded joint using the austenitic heat-resistant alloy with Mark I as the base material, directly after welding and after aging, cracks that are believed to be liquation cracks and SIPH cracks, respectively, were produced. This is presumably because the Sn content of the austenitic heat-resistant alloy with Mark I was too high.

In the welded joints using the austenitic heat-resistant alloys with Marks J and K as the base material, cracks that are believed to be SIPH cracks were produced after aging. This is presumably because the N contents in the austenitic heat-resistant alloys with Marks J and K were too high and thus excess amounts of carbonitrides precipitated within grains. In these welded joints, SIPH cracks were not prevented even though the S content in the base material was reduced and the grain size was controlled to be in the specified range.

The welded joint using the austenitic heat-resistant alloy with Mark L as the base material had good weldability in fabrication and weld crack resistance, but the creep rupture time was below the target. This is presumably because the amount of W contained in the austenitic heat-resistant alloy with Mark L was below the lower limit.

### INDUSTRIAL APPLICABILITY

The present invention can be suitably used as an austenitic heat-resistant alloy used as a high-temperature part such as a main steam tube or high-temperature reheating steam tube in a thermal power boiler.

## Claims

1. An austenitic heat-resistant alloy having a chemical composition of, in mass %:
0.04 to 0.15 % C;
0.05 to 1 % Si;
0.3 to 2.5 % Mn;
up to 0.04 % P;
up to 0.0015 % S;
2 to 4 % Cu:
11 to 16 % Ni;
16 to 20 % Cr;
2.2 to 5 % W;
0.1 to 0.8 % Nb;
0.05 to 0.35 % Ti;
0.001 to 0.015 % N;
0.0005 to 0.01 % B;
up to 0.03 % Al;
up to 0.02 % O;
0 to 0.02 % Sn;
0 to 0.5 % V;
0 to 2 % Co;
0 to 5 % Mo;
0 to 0.02 % Ca;
0 to 0.02 % Mg;
0 to 0.2 % REM; and
the balance being Fe and impurities,
the alloy having a microstructure with a grain size represented by a grain size number in accordance with ASTM E112 of 2.0 or more and less than 7.0.

2. The austenitic heat-resistant alloy according to claim 1, wherein the chemical composition contains, in mass %:
0.001 to 0.02 % Sn.

3. The austenitic heat-resistant alloy according to claim 1 or 2, wherein the chemical composition contains one or more elements selected from one of the first to third groups provided below, in mass %:
first group: 0.01 to 0.5 % V;
second group: 0.01 to 2 % Co and 0.01 to 5 % Mo; and
third group: 0.0005 to 0.02 % Ca; 0.0005 to 0.02 % Mg; and 0.0005 to 0.2 % REM.

4. A welded joint using the austenitic heat-resistant alloy according to any one of claims 1 to 3 as the base material.

## Patentansprüche

1. Hitzebeständige Austenitlegierung mit einer chemischen Zusammensetzung von Folgendem, in Masse-%:
0,04 bis 0,15 % C;
0,05 bis 1 % Si;
0,3 bis 2,5 % Mn;
bis zu 0,04 % P;
bis zu 0,0015 % S;
2 bis 4 % Cu;
11 bis 16 % Ni;
16 bis 20 % Cr;
2,2 bis 5 % W;
0,1 bis 0,8 % Nb;
0,05 bis 0,35 % Ti;
0,001 bis 0,015 % N;
0,0005 bis 0,01 % B;
bis zu 0,03 % Al;
bis zu 0,02 % O;
0 bis 0,02 % Sn;
0 bis 0,5 % V;
0 bis 2 % Co;
0 bis 5 % Mo;
0 bis 0,02 % Ca;
0 bis 0,02 % Mg;
0 bis 0,2 % REM; und
wobei der Rest Fe und Verunreinigungen sind,
wobei die Legierung eine Mikrostruktur mit einer Korngröße hat, die durch eine Komgrößennummer gemäß ASTM E112 von 2,0 oder mehr und weniger als 7,0 dargestellt wird.

2. Hitzebeständige Austenitlegierung nach Anspruch 1, wobei die chemische Zusammensetzung in Masse-% Folgendes enthält:
0,001 bis 0,02 % Sn.

3. Hitzebeständige Austenitlegierung nach Anspruch 1 oder 2, wobei die chemische Zusammensetzung in Masse-% ein oder mehr Elemente enthält, die aus einer der nachstehend bereitgestellten ersten bis dritten Gruppe ausgewählt sind:
erste Gruppe: 0,01 bis 0,5 % V;
zweite Gruppe: 0,01 bis 2 % Co und 0,01 bis 5 % Mo; und
dritte Gruppe: 0,0005 bis 0,02 % Ca; 0,0005 bis 0,02 % Mg; und 0,0005 bis 0,2 % REM.

4. Schweißverbindung unter Verwendung der hitzebeständigen Austenitlegierung nach einem der Ansprüche 1 bis 3 als das Ausgangsmaterial.

## Revendications

1. Alliage thermorésistant austénitique ayant une composition chimique de, en % en masse :
0,04 à 0,15 % de C ;
0,05 à 1 % de Si ;
0,3 à 2,5 % de Mn ;
jusqu'à 0,04 % de P ;
jusqu'à 0,0015 % de S ;
2 à 4 % de Cu ;
11 à 16 % de Ni ;
16 à 20 % de Cr;
2,2 à 5 % de W ;
0,1 à 0,8 % de Nb ;
0,05 à 0,35 % de Ti ;
0,001 à 0,015 % de N ;
0,0005 à 0,01 % de B ;
jusqu'à 0,03 % de Al ;
jusqu'à 0,02 % de O ;
0 à 0,02 % de Sn ;
0 à 0,5 % de V ;
0 à 2 % de Co ;
0 à 5 % de Mo ;
0 à 0,02 % de Ca ;
0 à 0,02 % de Mg ;
0 à 0,2 % de REM ; et
le reste étant constitué de Fe et d'impuretés,
l'alliage ayant une microstructure avec une taille de grain représentée par un numéro de taille de grain en conformité avec la norme ASTM E112 de 2,0 ou plus et de moins de 7,0.

2. Alliage thermorésistant austénitique selon la revendication 1, dans lequel la composition chimique contient, en % en masse :
0,001 à 0,02 % de Sn.

3. Alliage thermorésistant austénitique selon la revendication 1 ou 2, dans lequel la composition chimique contient au moins un élément choisi parmi l'un des premier à troisième groupes indiqué ci-dessous, en % en masse :
premier groupe : 0,01 à 0,5 % de V ;
deuxième groupe : 0,01 à 2 % de Co et 0,01 à 5 % de Mo ; et
troisième groupe : 0,0005 à 0,02 % de Ca ; 0,0005 à 0,02 % de Mg ; et 0,0005 à 0,2 % de REM.

4. Joint soudé utilisant l'alliage thermorésistant austénitique selon l'une quelconque des revendications 1 à 3 en tant que matériau de base.
